# EUROPEAN PATENT APPLICATION

(11) **EP 2 128 953 A2**
(43) Date of publication of application: **02.12.2009**
(21) Application number: 09251346.4
(22) Date of filing: 19.05.2009
(51) Int. Cl.: H02J 3/00, H02J 4/00, H02J 13/00

(54) **Electric power and control communications distribution system**

(30) Priority: 28.05.2008 US 128018
(71) Applicant: Hamilton Sundstrand Corporation, Windsor Locks, CT 06096-1010 (US)
(72) Inventor: Dickey, John A., Rockford, IL 61109 (US)
(74) Representative: Tomlinson, Kerry John

(57) **Abstract**

An electric power generation and distribution system includes a power distribution panel (26), a plurality of power distribution nodes (28A) in communication with the power distribution panel, and a plurality of interconnect couplings (34) that couple the power distribution panel to each of the plurality of power distribution nodes. Each of the plurality of interconnect couplings communicate both electrical power signals and communication signals across a shared cable system (30).

## Description

### BACKGROUND

This invention generally relates to an electric power generation and distribution system containing communication capabilities, for example an aircraft electric power generation and distribution system.

Modem day gas turbine engines provide the necessary power and thrust requirements for propulsion of a vehicle, such as an aircraft, for example. Electrical power generation and distribution systems are known that draw power from the gas turbine engine, and communicate the power throughout an aircraft.

Conventional electric power generation and distribution systems include generators that produce and communicate electric power to one or more primary power distribution panels. This power is traditionally three-phase, 115 Vac, 400 Hertz or variable frequency. The power that is communicated to the primary distribution panel is further communicated to a plurality of remote power distribution nodes. Each remote power distribution node distributes the power to supply various AC and DC loads and in many cases provides control, protection, and monitoring. For example, the remote power distribution nodes supply power to power electric motors, lights, and other aircraft systems.

The remote power distribution nodes require communication signals in addition to the electric power signals when the nodes include control, protection, or monitoring. The communication signals provide control commands for distribution of power to the loads and provide status of monitor data and confirmation of command execution. Because distribution, remote distribution, or the various loads require both communication signals and electrical power signals, relatively complex electrical coupling arrangements are required to communicate the signals throughout the electric power generation and distribution system.

In addition, known electric power generation and distribution systems include both power feed cables and separate communication cables for supplying the necessary electrical power signals and communication signals to the various loads. In many cases, the reliability requirements result in the need for the communications cables to be redundant, further increasing the number of cables and complexity of interfaces. Use of separate power feed and communication cables increases the amount of cables that are distributed through the aircraft, increases the weight of the aircraft, and necessitates additional coupling arrangements and protective systems. This may negatively affect aircraft performance.

Accordingly, it is desirable to provide a reliable electric power generation and distribution system that provides significant weight reductions for an aircraft.

### SUMMARY OF THE DISCLOSURE

An electric power generation and distribution system includes a power distribution panel, a plurality of power distribution nodes, and a plurality of interconnect couplings that couple the power distribution panel to each of the plurality of power distribution nodes. Each of the plurality of interconnect couplings communicate both electrical power signals and communication signals across a shared cable system.

A method for operating an electric power generation and distribution system includes connecting a plurality of power feed cables between a power distribution panel and at least one power distribution node of the electric power generation and distribution system. Both power signals and communication signals are communicated simultaneously over each of the plurality of power feed cables.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a general schematic view of an aircraft including an example electric power generation and distribution system;
Figure 2 schematically illustrates an example electric power generation and distribution system;
Figure 3 schematically illustrates an example interconnect coupling of the example electric power generation distribution system illustrated in Figure 2.

Figure 4 illustrates both a right hand phase modulation and a left hand phase modulation of a communication signal in a three phase system.

### DETAILED DESCRIPTION OF THE DISCLOSED EMBODIMENT

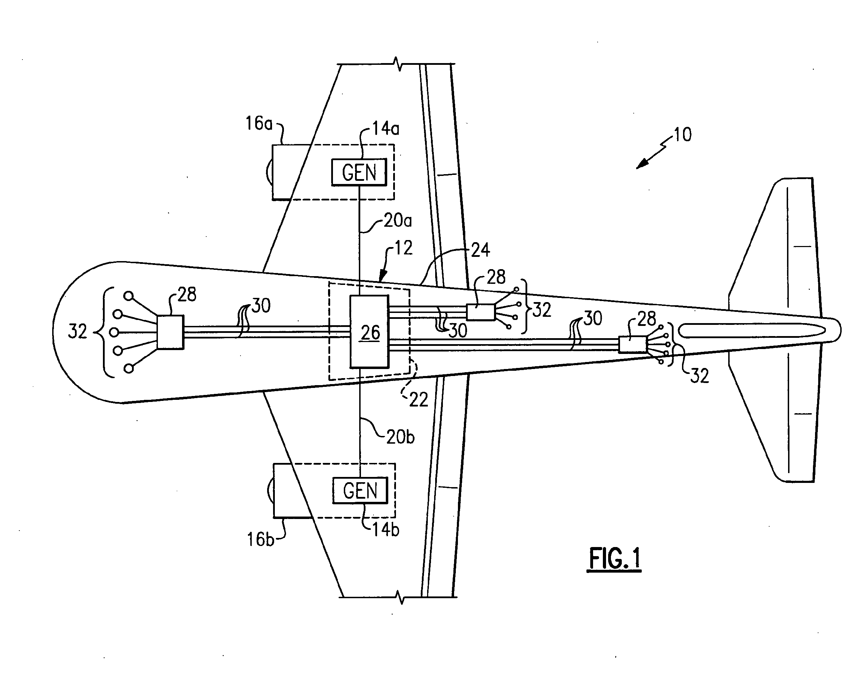

Figure 1 illustrates an aircraft 10 having an electric power generation and distribution system 12. In this example, the aircraft 10 is powered by generators 14a, 14b. The generators 14a, 14b are coupled to and driven from each of the aircraft engines 16a, 16b. It should be understood that the present disclosure is equally applicable for use with any application where a three-phase power transmission system is used and communication with instrumentation is desired, and the present disclosure is not limited to applications within an aircraft.

The output of each generator 14a, 14b is coupled by feed cables 20A, 20B to an electronics bay 22. In one example, the electronics bay 22 is located within the fuselage 24 of the aircraft 10. The power produced by the generators 14a, 14b is routed via the feed cables 20A, 20B to one or more power distribution panels 26. In one example, the power distribution panel 26 is powered by three-phase, 115 VAC, 400 Hertz power.

The electric power generation and distribution system 12 also includes a plurality of power distribution nodes 28 in communication with the power distribution panel 26. Although an example configuration and positioning of the power distribution panel 26 and the plurality of power distribution nodes 28 is illustrated in Figure 1, a worker of ordinary skill in the art having the benefit of this disclosure would understand that these components could consist of a multitude of configurations and positionings within the aircraft 10.

Each power distribution node 28 both receives power signals and communication signals from a plurality of power feed cables 30 that distribute the power signals and communication signals to a plurality of system loads 32 associated with the engine power generation and distribution system 12. In one example, the power signals provide power to those system loads 32 that require AC power. In another example, the power signals may be converted to DC power to provide power to those system loads 32 that require DC power, such as avionic systems, for example.

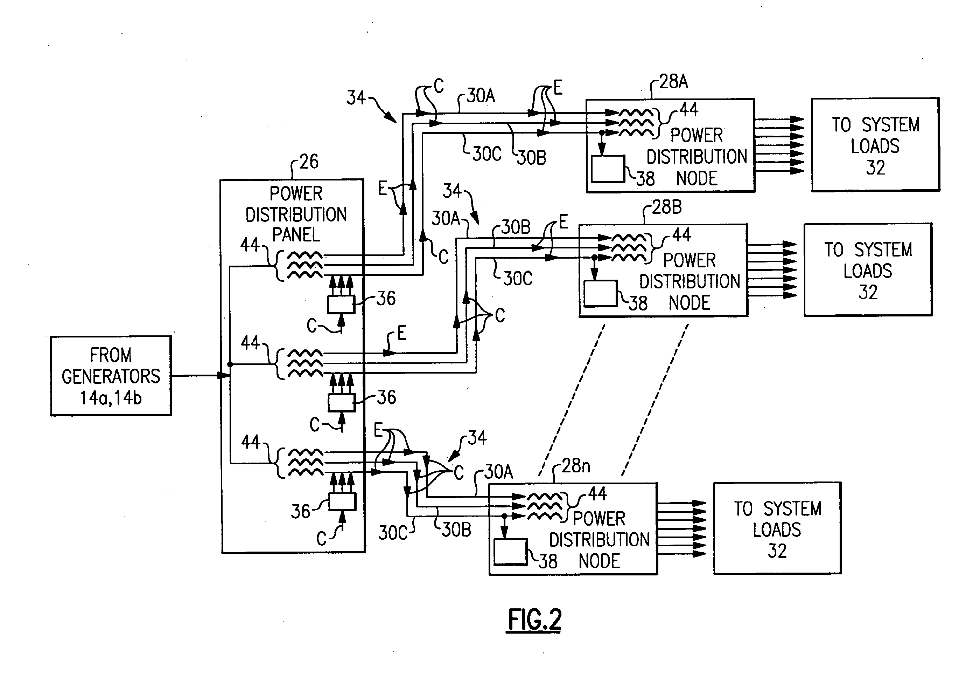

Figure 2 schematically illustrates an example electric power generation and distribution system 12. Three-phase, alternating current (AC) power from each generator 14a, 14b is distributed to the power distribution panel 26. The power distribution panel 26 further distributes the power to a plurality of power distribution nodes 28A-28n. In this example, the electric power generation and distribution system 12 includes three power distribution nodes 28. However, the electrically powered generation and distribution system 12 may include any number of power distribution nodes 28A-28n.

A plurality of interconnect couplings 34 couple the power distribution panel 26 to the plurality of power distribution nodes 28. In this example, each of the plurality of interconnect couplings 34 includes a plurality of power feed cables 30 that extend between the power distribution panel 26 and each power distribution node 28. In one example, each interconnect coupling 34 includes three power feed cables 30A-30C positioned between the power distribution panel 28 and each power distribution node 28. Both electrical power signals E and communication signals C are transmitted over the power feed cables 30A-30C, as is further discussed below. In one example control/status communication signals and power signals are transmitted between the power distribution panel 26 and each power distribution node 28A-28n (or vice-versa) over a single set of power feed cables 30A-30C. That is, both the communication signals and the power signals are transmitted over a shared cable system. Alternatively, other communications signals could be transmitted over the power feed cables 30A-30C in the same way.

Each interconnect coupling 34 also includes a modulation circuit 36 and a demodulation circuit 38. Other arrangements and positions are within the scope of this disclosure; by way of example, both ends of interconnect couplings 34 can have a modulation circuit 36 and a demodulation circuit 38 to support bi-directional communications. In the illustrated example, the modulation circuits are located at the power distribution panel 26 and the demodulation circuits 38 are located at each power distribution node 28. The modulation circuit 36 modulates the communication signals C such that the communication signals C may be coupled to the power feed cables 30 for the simultaneous communication of both the electrical power signals E and the communication signals C over the same power feed cables 30A-30C. The demodulation circuits 38 demodulate and decouple the communication signals from the power feed cables 30A-30C such that the communication signals C may be communicated to command and control operation of the plurality of system loads 32.

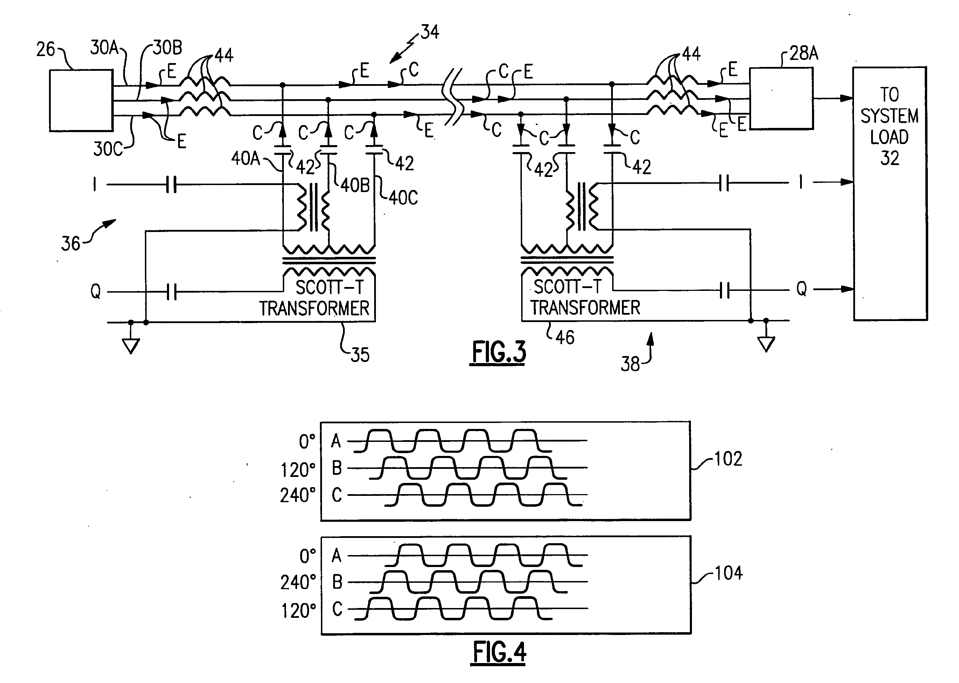

Figure 3 illustrates an example interconnect coupling 34 that couples the power distribution panel 26 to one of the plurality of power distribution nodes 28A. Although only a single power distribution node 28A is illustrated in this example, a worker of ordinary skill in the art having the benefit of this disclosure would understand that a substantially similar interconnect coupling 34 would couple the power distribution panel 26 to each additional power distribution node 28B-28n of the electric power generation and distribution system 12.

In one example, the interconnect coupling 34 includes a modulation circuit 36, a demodulation circuit 38, and three power feed cables 30A, 30B and 30C using a standard three phase power distribution scheme. The electrical power signals E are communicated over each feed cable 30A, 30B and 30C. The electrical power signals E run in parallel, and the voltage phase of the electrical power signals E of each power cable 30A, 30B and 30C is phase shifted one-third of a cycle. That is, the electrical power signals E are three phase, AC power signals. In this way, constant three-phase voltage is supplied to the power distribution node 28 for distributing to a system load 32.

The modulation circuit 36 receives communication signals from the power distribution panel 26. In one example, the signals are I and Q Quadrature Amplitude Modulation signals. That is, the quadrature signals I and Q are out of phase relative to one another by 90°. The quadrature signals I and Q are modulated to change the phase of the signals I and Q. After modulation, the quadrature signals I and Q become a three-phase communication signal with each phase being communicated over one of the interconnect couplings 34.

Figure 4 illustrates a phase angle modulation scheme that can be used to encode the three-phase communication signal on power lines. In order to communicate using a three-phase communication signal over a power system it is necessary to distinguish between the power signal and the communication signal. One example accomplishes this by using a different frequency for the three-phase communication signal than the power signal. Information is encoded on the communication signal based on the phase angle rotation of the three-phase signal. For example when the phase angle rotation is right handed 102 the communication signal is sending a bit of 1, and when the phase angle rotation is left handed 104 the communication signal is sending a bit of 0. It is clear that the opposite association (right handed rotation = 0, and left handed rotation =1) would be functionally identical.

In one example, the modulation circuit 36 includes a Scott-T transformer 35 that converts the two-phase quadrature signals I and Q to three phase communication signals C that are 120° apart. Once converted, the three-phase communication signals C are communicated over feed cables 40A, 40B and 40C, and are coupled to the power feed cables 30A, 30B and 30C with a plurality of capacitors 42. That is, the modulation circuit 36 modulates the quadrature signals I and Q to vary the phase of the signals I, Q such that the communication signals C may be coupled to the same feed cable 30A, 30B and 30C that communicate the electric power signals E. The phase shift of the quadrature signals I and Q is required to couple the communication signals C to the power feed cables 30A-30C because the source of the electric power signals E and the source of the communication signals C operate at different frequencies. Other methods may be possible to create the 3 phase communications signal components based on the desired data, and would still fall under the scope of this application.

Once the communication signals C are coupled to the feed cable 30A, 30B, and 30C, the communication signals C are communicated to the power distribution node 28A and are received by the demodulation circuit 38 via the feed cables 40A-40C. Each feed cable 30A-30C includes inductors 44 for directing and blocking the communication signals C. That is, the inductors 44 prevent the communication signals C from being communicated to certain portions of the electric power generation and distribution system 12. In one example, the inductors 44 are windings.

The three-phase communication signals C are received by the demodulation circuit 38 for demodulating the communication signals C. The demodulation circuit 38 converts the communication signals C back to two-phase quadrature signals I and Q. Once the communication signals C are returned to the quadrature signal form, the signals I and Q are communicated to the system load 32 to command and control operation of the system load 32. The demodulation circuit 38, of this example, includes a Scott-T transformer 46, for example, for re-converting the communication signals C to two-phase quadrature signals I and Q.

The example electric power generation and distribution system 12 communicates both electrical power signals E and communication signals C over the same power feed cables 30A-30C. Reliability benefits are achieved by the example electric power generation and distribution system 12 because the communication signals C cannot be interrupted without the loss of the electric power signals E, in which case the electric power generation and distribution system 12 will not be powered and communications are not critical. Further reliability enhancements are achieved by the example arrangement in that a "fallback" to a traditional two wire communication system is possible in response to failure of one of the three power feed cables 30A-30C.

The example interconnect coupling 34 modulates and couples the communication signals C onto the power feed cables 30A-30C without significant electromagnetic interference emissions. This is possible because the three-phase communication signal is a balanced three-phase signal. As a result of this balancing the far field EMI emissions of each phase signal are canceled out by the emissions of the other two phases, resulting in effectively no far field EMI emissions from any of the phases.

The utilization of the three-phase communication signal on the power lines eliminates the need for a separate communications system and allows for lighter weight applications. This is possible because even if one of the power lines is cut, resulting in a single phase system, the communications signal can be altered to communicate using the traditional two-wire communication scheme.

The foregoing description shall be interpreted as illustrative and not in any limiting sense. A worker of ordinary skill in the art would recognize that certain modifications would come within the scope of this disclosure. For these reasons, the following claims should be studied to determine the true scope and content of this disclosure.

## Claims

1. An electric power generation and distribution system (12), comprising:
a power distribution panel (26); and
a plurality of power distribution nodes (28) in communication with said power distribution panel; and
a plurality of interconnect couplings (34) that couple said power distribution panel to each of said plurality of power distribution nodes, wherein each of said plurality of interconnect couplings communicate both electrical power signals and communication signals across a shared cable system (30).

2. The system of claim 1 wherein each of said communication signals comprises part of a three-phase communication signal.

3. The system of claim 2 wherein information is encoded on said three-phase communication signal through manipulation of a phase sequence modulation of said three-phase communication signal.

4. The system of claim 3 wherein said manipulation comprises alteration of the phase angle rotation of said three-phase communication signal.

5. The system as recited in claim 1, 2, 3 or 4 wherein each of said plurality of interconnect couplings include a plurality of power feed cables (30).

6. The system as recited in any preceding claim, comprising a plurality of system loads (32) in communication with each of said plurality of power distribution nodes (28), and wherein said electrical power signals power said plurality of system loads and said communication signals command and control operation of said plurality of system loads.

7. The system as recited in any preceding claim, wherein three phase alternating current power is supplied to the power distribution panel (26) and is distributed to each of said plurality of power distribution nodes (28) over said shared cable system (30).

8. The system as recited in any preceding claim, wherein said communication signals are modulated and coupled onto said shared cable system to communicate both said electrical power signals and said communication signals over said shared cable system (30).

9. The system as recited in any preceding claim, wherein each of said plurality of interconnect couplings (34) include a modulation circuit (36) and a demodulation circuit (38).

10. The system as recited in claim 9, wherein each of said modulation circuits and said demodulation circuits include a Scott-T transformer (35, 46).

11. A method for operating an electric power generation and distribution system (12) having a power distribution panel (26) and at least one power distribution node (28), comprising the steps of:
a) connecting a plurality of power feed cables (30) between the power distribution panel and the at least one power distribution node of the electric power generation and distribution system; and
b) communicating both electrical power signals and communication signals over each of said plurality of power feed cables.

12. The method as recited in claim 11, comprising the steps of:
c) powering a system load (32) with the electrical power signals, and
d) controlling and commanding operation of a system load with the communication signals.

13. The method as recited in claim 11 or 12, comprising the steps of prior to said step b):
modulating the communication signals; and
coupling the communication signals to the plurality of power feed cables.

14. The method as recited in claim 17, comprising the steps of subsequent to said step b):
demodulating the communication signals; and
decoupling the communication signals from the plurality of power feed cables.

15. The method as recited in claim 11, 12, 13 or 14, wherein the plurality of power feed cables include three power feed cables (30) connected between the power distribution panel (26) and the at least one power distribution node (28), and said step b) includes the step of:
communicating both the electrical power signals and the communication signals over the three power feed cables.
